# EUROPEAN PATENT SPECIFICATION

(11) **EP 2 029 384 B1**
(45) Date of publication and mention of the grant of the patent: **25.11.2009**
(21) Application number: 07734731.8
(22) Date of filing: 01.06.2007
(51) Int. Cl.: B60K 13/04

(54) **EXHAUST APPARATUS**
ABGASVORRICHTUNG
APPAREIL D'ÉCHAPPEMENT DE GAZ

(30) Priority: 07.06.2006 JP 2006158392
(43) Date of publication of application: 04.03.2009
(73) Proprietor: Toyota Jidosha Kabushiki Kaisha, Toyota-shi, Aichi-ken, 471-8571 (JP)
(72) Inventor: YAMAGUCHI, Junichi, Toyota-shi, Aichi-ken 471-8571 (JP)
(74) Representative: Kuhnen & Wacker
(86) International application number: PCT/IB2007/001443
(87) International publication number: WO 2007/141615

(56) References cited:
- EP-A- 1 408 209
- US-A- 5 451 015
- US-A- 5 496 069
- US-A- 5 813 491

## Description

### BACKGROUND OF THE INVENTION

### 1. Field of the Invention

The present invention relates to an exhaust apparatus that discharges exhaust gas from an internal combustion engine mounted aboard a vehicle.

### 2. Description of the Related Art

A vehicle such as an automobile has a fuel system apparatus such as a fuel tank provided at rear of the vehicle and an exhaust apparatus that extends toward the rear of the vehicle to discharge exhaust from the internal combustion engine of the vehicle to the rear of the vehicle. Japanese Patent Application Publication No. JP-A-5-87223 discloses as an exhaust apparatus in which a muffler is provided midway in an exhaust pipe connected to the internal combustion engine, a part of the exhaust pipe downstream of the muffler is bent upward to pass over the top of a fuel tank.

In the above-noted exhaust apparatus, when the vehicle is subject to a rear-end collision, the exhaust pipe is pushed forward from the rear, because there is no displacement at the front part of the internal combustion engine and at the joining part of the exhaust pipe with the engine, and because the part of the exhaust pipe downstream of the muffler is bent upward, that part is bent to bulge farther upward. For this reason, when the vehicle is subjected to a rear-end collision, interference between the part of the exhaust pipe downstream of the muffler and the fuel tank is avoided.

As described above, bending the part of the exhaust pipe downstream of the muffler to pass over the top of the fuel tank makes it is possible to eliminate interference between this part with the fuel tank when the vehicle is subjected to a rear-end collision.

When a front-end collision occurs, however, because the internal combustion engine is displaced toward the rear of the vehicle and, as a result, the overall exhaust apparatus is displaced toward the rear of the vehicle, the part of the exhaust pipe downstream of the muffler may interfere with the fuel tank.

Although the foregoing problem may be addressed by providing additional space in the longitudinal direction of the vehicle between the part downstream of the muffler and the fuel tank, it is difficult to simultaneously provide the additional space and maintain sufficient underfloor space.

A further exhaust pipe structure according to the preamble of claim 1 is known from EP 1 408 209 A1. Said exhaust pipe structure has, under a floor of a vehicle, an exhaust passage for exhaust gas discharged from a vehicle-installed engine, and at least one muffler is provided on an intermediate portion of the exhaust passage. The at least one muffler includes a main muffler having the greatest muffler capacity. An external cylinder forming an outer shell portion of the main muffler has a circular sectional shape having a diameter of 100 mm to 150 mm, or a sectional shape that is substantially equal to an area of the circular sectional shape. The external cylinder has a length of 800 mm to 12000 mm. The main muffler is disposed in a tunnel portion that is formed between the front wheels and the rear wheels.

### SUMMARY OF THE INVENTION

The present invention provides an exhaust apparatus capable of avoiding interference with the fuel system apparatus when a front-end collision occurs, and also provides sufficient underfloor space.

The means and operating effects of the present invention to achieve the above-noted object is described below. An exhaust apparatus in accordance with the invention includes: a fuel system apparatus, provided at the rear of a vehicle; an exhaust pipe connected to an internal combustion engine mounted aboard a vehicle and a muffler provided midway in the exhaust pipe, wherein a first portion of the exhaust pipe and a second portion of the exhaust pipe are disposed downstream of the muffler; the first portion of the exhaust pipe is connected to the muffler and extends from the muffler to the second portion of the exhaust pipe; and the second portion of the exhaust pipe is bent with respect to the first portion of the exhaust pipe and extends toward the rear of the vehicle while maintaining a prescribed clearance around the fuel system apparatus along at least a part of the fuel system apparatus. The exhaust apparatus further has a restricting member, behind the muffler, which contacts with the muffler so that it restricts the rearward displacement of the muffler, wherein a distance in the longitudinal direction of the vehicle between the restricting member and the muffler is smaller than the minimum distance in the longitudinal direction of the vehicle between the second portion of the exhaust pipe and the fuel system apparatus.

According to the above constitution, when the vehicle is subjected to a front-end collision, with the displacement of the internal combustion engine toward the rear of the vehicle, there is an accompanying displacement of the overall exhaust apparatus toward the rear of the engine. Before the second portion of the exhaust pipe interferes with the exhaust apparatus, the muffler comes into contact with the restricting member, which restricts the muffler from being displaced toward the rear of the vehicle. For this reason, the first portion of the exhaust pipe and the second portion of the exhaust pipe that are connected to the muffler are not further displaced toward the rear of the vehicle, making it possible to avoid interference by the second portion of the exhaust pipe with the fuel system apparatus. Also, as a result of establishing underfloor space in the vehicle, even in the case in which it is not possible to establish a sufficient distance between the second portion of the exhaust pipe and the fuel system apparatus, by setting a smaller distance in the longitudinal direction of the vehicle between the muffler and the restricting member in comparison with the distance between the second portion of the exhaust pipe part and the fuel system apparatus, it is possible to achieve the above-noted effect.

In the above aspect, the restricting member may be a cross member that reinforces the vehicle. Because the cross member in the above-noted constitution serves also as a restricting member, it is not necessary to provide an additional restricting member, which avoids the additional cost of providing of providing an additional restricting member.

A pair of cross members may be provided to sandwich, from top and bottom, a part of the muffler positioned toward the rear of the vehicle in the exhaust pipe, and wherein the minimum distance between the pair of cross members may be set to be smaller than the maximum height of the muffler.

According to the above-noted constitution, when the vehicle is subjected to a front-end collision and there is an accompanying displacement of the overall exhaust apparatus toward the rear of the vehicle, the cross members restrict the muffler from further displacement toward the rear of the vehicle. For this reason, it is possible to properly restrict the first portion of the exhaust pipe and the second portion of the exhaust pipe connected to the muffler from further displacement toward the rear of the vehicle.

In the above aspect, a joint that absorbs any vertical displacement of the first portion of the exhaust pipe that accompanies the vertical displacement of the muffler may be provided in the first portion of the exhaust pipe.

According to the above-noted constitution, when the muffler is displaced not only toward the rear of the vehicle but also vertically at the time of a front-end collision, the accompanying vertical displacement of the first portion of the exhaust pipe is absorbed by the joint. This makes it possible to avoid interference of the first portion of the exhaust pipe with the fuel tank by the vertical displacement of the first portion of the exhaust pipe.

In the above aspect, a part that bends more easily than another part of the first portion of the exhaust pipe when the muffler is vertically displaced may be provided in the first portion of the exhaust pipe.

According to the above-noted constitution, when a front-end collision occurs in a vehicle and the muffler is displaced not only toward the rear of the vehicle, but vertically, the first portion of the exhaust pipe is also vertically displaced. With regard to this displacement, the displacement is restricted by the bending of a part of the first portion of the exhaust pipe part that bends more easily than another part of the first portion of the exhaust pipe. Stated differently, the vertical displacement of the first portion of the exhaust pipe in concert with the vertical displacement of the muffler is absorbed by the bending of a part of the first portion of the exhaust pipe that bends more easily than another part of the first portion of the exhaust pipe. It is, therefore, possible to restrict the vertical displacement of the first portion of the exhaust pipe in concert with vertical displacement of the muffler, and as a result possible to avoid interference by the first portion of the exhaust pipe with the fuel system apparatus caused by vertical displacement of the first portion of the exhaust pipe.

### BRIEF DESCRIPTION OF THE DRAWINGS

The foregoing and further objects, features, and advantages of the invention will become apparent from the following description of preferred embodiments with reference to the accompanying drawings, wherein like numerals are used to represent like elements, and wherein:
FIG 1A is a drawing showing an exhaust apparatus mounted aboard a vehicle viewed from above the vehicle, and FIG 1B is the exhaust apparatus viewed from the side of the vehicle;
FIG. 2 is a simplified drawing showing the movement of the muffler and the second exhaust pipe part at the time of a front-end collision;
FIG. 3 is a simplified drawing showing the movement of the muffler and the second exhaust pipe part at the time of a front-end collision; and
FIG. 4 is a simplified drawing showing another example of a first exhaust pipe part in exhaust apparatus.

### DETAILED DESCRIPTION OF THE EXAMPLE EMBODIMENTS

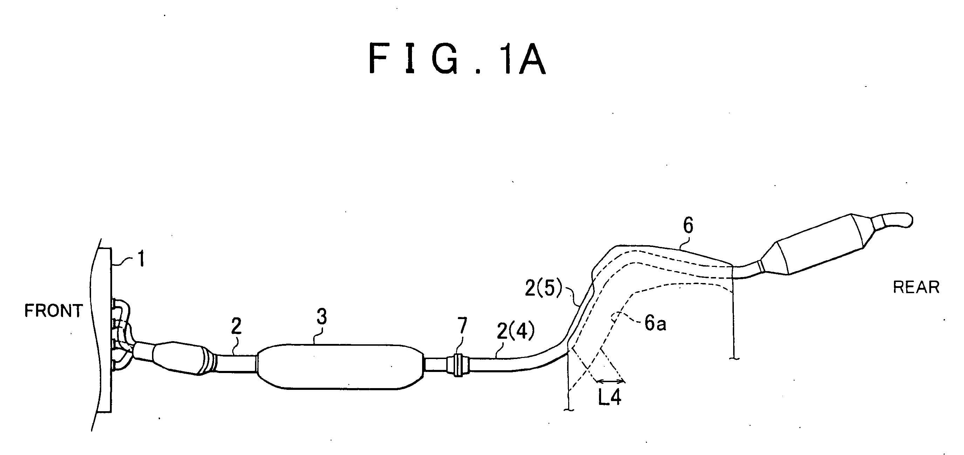

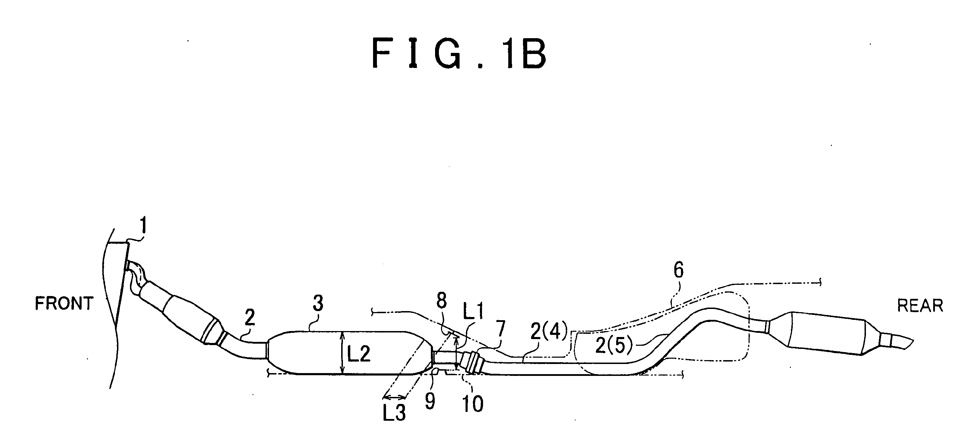

Embodiments of an exhaust apparatus according to the present invention are described below, with reference made to FIG. 1A, FIG. 1B, FIG. 2, and FIG. 3. FIG. 1A is a drawing showing an exhaust apparatus mounted aboard a vehicle viewed from above the vehicle, and FIG. 1B is the exhaust apparatus viewed from the side of the vehicle.

In the exhaust apparatus, a muffler 3 is provided midway in an exhaust pipe 2 connected to an internal combustion engine 1 mounted aboard the vehicle, and a first portion 4 of the exhaust pipe 2(i.e. an intermediate portion of the exhaust pipe 2 and a second portion 5 of the exhaust pipe 2 (i.e. a downstream portion of the exhaust pipe are provided downstream of the muffler 3. The exhaust pipe 2 (including the first portion 4 and second portion 5) and the muffler 3 are supported on the lower surface of the vehicle. Exhaust from the internal combustion engine 1 is discharged to the outside via the exhaust pipe 2, at which time the exhaust passes through the muffler 3, the first portion 4 and the second portion 5 of the exhaust pipe.

The first portion 4 of the exhaust pipe is connected to the muffler 3 and extends toward the rear of the vehicle. A fuel system apparatus (a fuel tank 6 in this embodiment) used to supply fuel to the internal combustion engine 1 is provided at the rear of the vehicle. The first portion 4 of the exhaust pipe extends toward the fuel tank 6. A joint 7 that absorbs vertical displacement of the first portion 4 of the exhaust pipe in the event that the muffler 3 is displaced vertically is provided midway in the first portion 4 of the exhaust pipe. The joint 7 that is used may be, for example, a ball joint or a flexible joint that allows free movement of the first portion 4of the exhaust pipe about the joint 7.

The second portion 5 of the exhaust pipe is connected so as to bend in the horizontal direction (up-down direction in FIG. 1A) with respect to the first portion 4 of the exhaust pipe, and extends along the side wall 6a of the fuel tank 6 toward the rear of the vehicle, while maintaining a prescribed clearance around the fuel tank 6. The sidewall 6a is substantially perpendicular to the road surface, the part of the sidewall 6a toward the front of the vehicle extends at an inclination toward the rear of the vehicle, and the part of the sidewall 6a toward the rear of the vehicle extending straight toward the rear of the vehicle. In order to increase the capacity and to achieve a fuel storage amount, a portion of the fuel tank 6 bulges out toward the side of the vehicle and covers the top of the part of the second portion 5 of the exhaust pipe that extends along the sidewall 6a (upward in FIG. 1A).

Next, the structure for restricting the displacement of the muffler 3 toward the rear of the vehicle so that the second portion 5 of the exhaust pipe does not interfere the fuel tank 6 when the vehicle is subjected to a front-end collision will be described in detail.

The vehicle has a plurality of reinforcing cross members and, of these cross members, a cross member provided further toward the rear of the vehicle than the muffler 3 is used to restsrict the movement of the muffler 3 toward the rear of the vehicle.

Specifically, as shown in FIG. 1B, in the vicinity of the floor 10 of the vehicle and farther to the rear of the vehicle than the muffler 3, a pair of cross members 8, 9 extending in the width direction of the vehicle are provided so as to sandwich the first portion 4 of the exhaust pipe therebetween from the top and bottom. The cross members 8, 9 function as restricting members. The minimum distance L1 in the vertical direction of the cross members 8, 9 is smaller than the maximum height L2 of the muffler 3. That is, at least one of L1 and L2 may be adjusted to obtain the above-described relationship between L1 and L2. By doing this, when the muffler 3 is displaced toward the rear of the vehicle, the muffler 3 comes into contact with and is caught by the cross members 8, 9, which restricts the muffler 3 from any further movement toward the rear of the vehicle.

The usual distance L3 in the longitudinal direction of the vehicle between the part of the cross members 8, 9 that catches the muffler 3 and the part of the muffler 3 that comes into contact with the cross members 8, 9 is smaller than the minimum distance L4 between the second portion 5 of the exhaust pipe and the sidewall 6a of the fuel tank 6 when the exhaust pipe is mounted abroad the vehicle. That is, at least one of L3 and L4 may be adjusted so as to obtain the above-noted relationship between L3 and L4. By doing this, if the overall exhaust apparatus is displaced toward the rear of the vehicle, before the second portion 5 of the exhaust pipe comes into contact with the side wall 6a of the fuel tank 6, the muffler 3 comes into contact with the cross members 8, 9, which restricts the muffler 3 from being displaced further toward the rear of the vehicle.

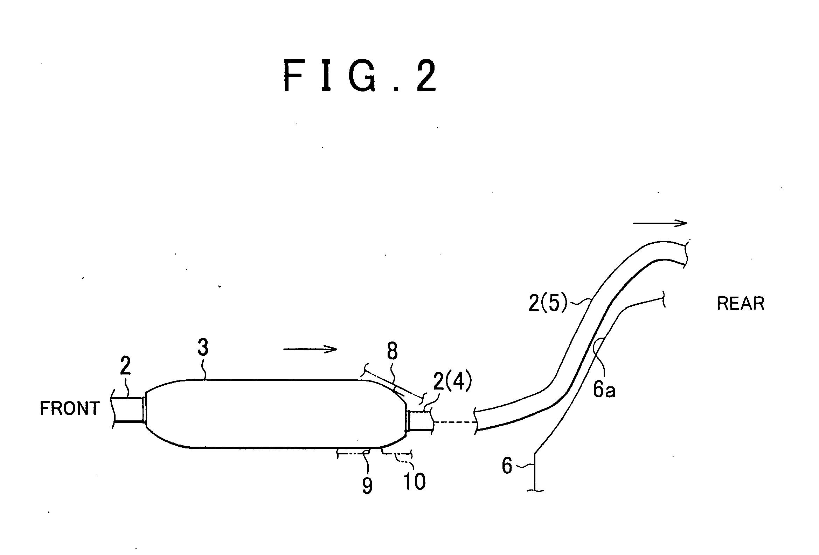

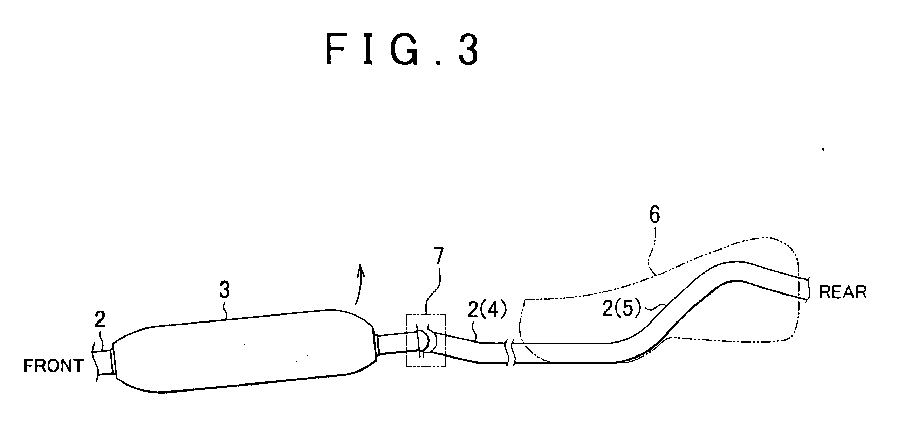

Next, the movement of the muffler 3 and the second portion 5 of the exhaust pipe when the vehicle is subjected to a front-end collision will be described, with reference to FIG. 2 and FIG. 3. If the vehicle is subjected to a front-end collision that displaces the internal combustion engine 1 toward the rear of the vehicle, there is an accompanying displacement of the overall exhaust apparatus toward the rear of the vehicle (direction of the arrow in FIG 2), which causes the second portion 5 of the exhaust pipe to approach the side wall 6a of the fuel tank 6. Before the second portion 5 of the exhaust pipe comes into contact with the side wall 6a, however, the muffler 3 comes into contact with the cross members 8, 9 shown in the same drawings, thereby restricting the muffler 3 from further movement toward the rear of the vehicle, which prevents interference with the fuel tank 6 by the second portion 5 of the exhaust pipe.

When a front-end collision occurs in a vehicle, the muffler might be displaced not only toward the rear of the vehicle, but also vertically. For example, when the muffler 3 is displaced upwardly as indicated by the arrow in FIG. 3, along with this displacement that the first portion 4 of the exhaust pipe is also displaced upwardly. Stated differently, the first portion 4 of the exhaust pipe approaches the part of the fuel tank 6 that bulges upward above the first portion 4 of the exhaust pipe (refer to FIG. 1B). With regard to the displacement of the first portion 4 of the exhaust pipe, however, when the muffler 3 is displaced upward, the bending of the joint 7, as shown in FIG. 3, restricts the first portion 4 of the exhaust pipe. This means that the upward displacement of the first portion 4 of the exhaust pipe accompanying the upward displacement of the muffler 3 is absorbed by the joint 7 provided midway in the first portion 4 of the exhaust pipe. Interference by the upward displacement of the first portion 4 of the exhaust pipe with the fuel tank 6 is, therefore, avoided.

The embodiment described in detail above achieves a number of effects. The first effect is that, when the vehicle is subjected to a front-end collision and the overall exhaust apparatus is displaced toward the rear of the vehicle, the muffler 3 makes contact with the cross members 8, 9 before making contact with the side wall 6a, further displacement of the muffler 3 toward the rear of the vehicle being restricted, which makes it possible to avoid interference by the second portion 5 of the exhaust pipe with the fuel tank 6. Also, as a result of establishing underfloor space in the vehicle, even if it is not possible to achieve a sufficient distance L4 in the longitudinal direction of the vehicle between the second portion 5 of the exhaust pipe and the fuel tank 6, by setting the distance L3 between the muffler 3 and the cross members 8, 9 small in comparison with the distance L4, the above-described effect is achieved.

The second effect is that, because the cross members 8, 9 restrict the displacement of the muffler 3 toward the rear of the vehicle, an additional restricting member need not be provided, thereby avoiding the additional cost associated with providing an additional restricting member.

The third effect is achieved by using a pair of cross members 8, 9 as cross members that restrict the displacement of the muffler 3 toward the rear of the vehicle, the cross members 8, 9 sandwiching from the top and bottom the first portion 4 of the exhaust pipe disposed to the rear of the vehicle from the muffler 3. The distance L1 between the cross members 8, 9 is set to a value that is smaller than the height L2 of the muffler 3. When the overall exhaust apparatus is displaced toward the rear of the vehicle at the time of a front-end collision, therefore, the muffler 3 catches on the pair of cross members 8, 9 and is restricted from further displacement toward the rear of the vehicle. For this reason, it is possible to restrict the first portion 4 of the exhaust pipe and the second portion 5 of the exhaust pipe from further displacement toward the rear of the vehicle.

The fourth effect is that, in the event of a front-end collision, when the muffler 3 is displaced not only toward the rear of the vehicle but also vertically, the accompanying vertical displacement of the first portion 4 of the exhaust pipe is absorbed by the joint 7. This makes it possible to avoid interference of the first portion 4 of the exhaust pipe with the fuel tank 6 by the vertical displacement of the first portion 4 of the exhaust pipe.

The foregoing embodiment may be modified in the following ways. Although ball joint or flexible joint is given as an example of the joint 7 that absorbs vertical displacement of the first portion 4 of the exhaust pipe accompanying vertical displacement of the muffler 3, a type of joint other than these types may be used.

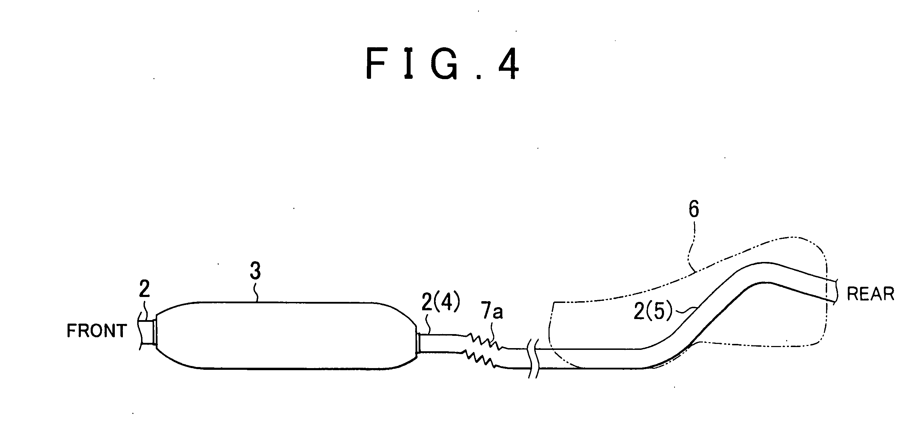

Instead of providing the joint 7 midway in the first portion 4 of the exhaust pipe, a part that is more easily bendable than another part of the exhaust pipe may be provided midway in the first exhaust pipe. As shown in FIG. 4, for example, a bending part 4a that is formed like a bellows may form as the easily bendable part. In this case, the same effect of the above described forth effect will be obtained.

It is not necessary to adapt the cross members 8, 9, to restrict the muffler 3 from moving farther toward the rear of the vehicle. The first portion 4 of the exhaust pipe may be, for example, disposed between a part other than the cross member provided on the vehicle floor 10 and the cross members8, 9, and the distance between the part and the cross members in the up-down direction may be set to a value that is smaller than the height L2 of the muffler 3. In this case, the same effect above described third effect will be also obtained.

Instead of using the cross members 8, 9 as the restricting member for restricting the displacement of the muffler 3 toward the rear of the vehicle, an additional restricting member may be provided in the vehicle.

## Claims

1. An exhaust apparatus comprising:
a fuel system apparatus (6), provided at the rear of a vehicle;
an exhaust pipe (2), connected to an internal combustion engine (1) mounted aboard
the vehicle; and
a muffler (3), provided midway in the exhaust pipe (2),
wherein
the exhaust pipe (2) has a first portion (4) and a second portion (5) which are disposed downstream from the muffler (3);
the first portion (4) of the exhaust pipe (2) connects with the muffler (3) and extends from the muffler (3) to the second portion (5) of the exhaust pipe (2); and the second portion (5) of the exhaust pipe (2) is bent with respect to the first portion (4) of the exhaust pipe (2) and extends toward the rear of the vehicle, wherein the second portion (5) of the exhaust pipe (2) maintains a prescribed clearance around the fuel system apparatus (6) along at least a part of the fuel system apparatus (6),
the exhaust apparatus further comprising a restricting member (8,9), provided behind the muffler (3), which makes contact with the muffler (3) to restrict the displacement of the muffler (3) when the muffler (3) is displaced toward the rear of the vehicle, the exhaust apparatus being **characterized in that**
a distance (L3) in the longitudinal direction of the vehicle between the restricting member (8, 9) and the muffler (3) is smaller than the minimum distance (L4) in the longitudinal direction of the vehicle between the second portion (5) of the exhaust pipe (2) and the fuel system apparatus.

2. The exhaust apparatus according to claim 1, wherein the restricting member (8, 9) is a cross member that reinforces the vehicle.

3. The exhaust apparatus according to claim 2, wherein a pair of cross members are provided to sandwich, from above and below, a rear portion of the muffler (3), and the minimum distance (L1) between the pair of cross members is smaller than the maximum height (L2) of the muffler (3).

4. The exhaust apparatus according to any one of claims 1 to 3, wherein a joint (7) that absorbs vertical displacement of the first portion (4) of the exhaust pipe (2) associated with the vertical displacement of the muffler (3) is provided in the first portion (4) of the exhaust pipe (2).

5. The exhaust apparatus according to any one of claims 1 to 3, wherein a part (7a) that bends more easily when the muffler (3) is displaced vertically than other part of the exhaust pipe (2) is provided in the first portion (4) of the exhaust pipe (2).

6. The exhaust apparatus according to any one of claims 1 to 5, wherein the fuel system apparatus (6) is a fuel tank.

## Patentansprüche

1. Abgasvorrichtung, aufweisend:
eine Kraftstoffsystemvorrichtung (6), die an der Rückseite des Fahrzeugs angeordnet ist;
ein Auspuffrohr (2), das mit einem Verbrennungsmotor (1) verbunden ist, der an Bord des Fahrzeugs montiert ist; und
einen Schalldämpfer (3), der in der Mitte des Auspuffrohrs (2) angeordnet ist,
wobei
das Auspuffrohr (2) einen ersten Abschnitt (4) und einen zweiten Abschnitt (5) aufweist, die stromabwärts des Schalldämpfers (3) angeordnet sind;
der erste Abschnitt (4) des Auspuffrohrs (2) mit dem Schalldämpfer (3) verbunden ist und sich von dem Schalldämpfer (3) zu dem zweiten Abschnitt (5) des Auspuffrohrs (2) erstreckt; und
der zweite Abschnitt (5) des Auspuffrohrs (2) in Bezug auf den ersten Abschnitt (4) des Auspuffrohrs (2) gebogen ist und sich zur Rückseite des Fahrzeugs erstreckt, wobei der zweite Abschnitt (5) des Auspuffrohrs (2) einen vorgeschriebenen Freiraum um die Kraftstoffsystemvorrichtung (6) entlang zumindest einem Teil der Kraftstoffsystemvorrichtung (6) beibehält,
wobei die Abgasvorrichtung ferner ein hinter dem Schalldämpfer (3) angeordnetes Begrenzungselement (8, 9) aufweist, das mit dem Schalldämpfer (3) in Kontakt gelangt, so dass die Verschiebung des Schalldämpfers (3) begrenzt wird, wenn der Schalldämpfer (3) zur Rückseite des Fahrzeugs hin verschoben wird,
wobei die Abgasvorrichtung **dadurch gekennzeichnet ist, dass**
ein Abstand (L3) in Längsrichtung des Fahrzeugs zwischen dem Begrenzungselement (8, 9) und dem Schalldämpfer (3) kleiner ist als der minimale Abstand (L4) in Längsrichtung des Fahrzeugs zwischen dem zweiten Abschnitt (5) des Auspuffrohrs (2) und der Kraftstoffsystemvorrichtung.

2. Abgasvorrichtung nach Anspruch 1, wobei das Begrenzungselement (8, 9) ein das Fahrzeug verstärkender Querträger ist.

3. Abgasvorrichtung nach Anspruch 2, wobei ein Paar von Querträgern so angeordnet sind, dass sie, von oben und unten, einen hinteren Abschnitt des Schalldämpfers (3) von beiden Seiten umgeben, und der minimale Abstand (L1) zwischen dem Paar von Querträgern geringer ist als die maximale Höhe (L2) des Schalldämpfers (3).

4. Abgasvorrichtung nach einem der Ansprüche 1 bis 3, wobei ein Gelenk (7), das eine vertikale Verschiebung des ersten Abschnitts (4) des Auspuffrohrs (2), die mit einer vertikalen Verschiebung des Schalldämpfers (3) in Zusammenhang steht, aufnimmt, in dem ersten Abschnitt (4) des Auspuffrohrs (2) angeordnet ist.

5. Abgasvorrichtung nach einem der Ansprüche 1 bis 3, wobei ein Teil (7a), der, wenn der Schalldämpfer (3) vertikal verschoben wird, sich leichter verbiegt als ein anderer Teil des Auspuffrohrs (2), in dem ersten Abschnitt (4) des Auspuffrohrs (2) angeordnet ist.

6. Abgasvorrichtung nach einem der Ansprüche 1 bis 5, wobei die Kraftstoffsystemvorrichtung (6) ein Kraftstofftank ist.

## Revendications

1. Appareil d'échappement comprenant :
un appareil de système de carburant (6), prévu à l'arrière d'un véhicule ;
un tuyau d'échappement (2), connecté à un moteur à combustion interne (1) monté à bord du véhicule ; et
un silencieux (3), prévu au milieu du tuyau d'échappement (2),
dans lequel
le tuyau d'échappement (2) a une première partie (4) et une deuxième partie (5) qui sont disposées en aval du silencieux (3) ;
la première partie (4) du tuyau d'échappement (2) se connecte avec le silencieux (3) et s'étend du silencieux (3) jusqu'à la deuxième partie (5) du tuyau d'échappement (2) ; et
la deuxième partie (5) du tuyau d'échappement (2) est courbée par rapport à la première partie (4) du tuyau d'échappement (2) et s'étend vers l'arrière du véhicule,
dans lequel la deuxième partie (5) du tuyau d'échappement (2) maintient un espace prescrit autour de l'appareil de système de carburant (6) le long d'au moins une partie de l'appareil de système de carburant (6),
l'appareil d'échappement comprenant en outre un élément de restriction (8, 9), prévu derrière le silencieux (3), qui fait contact avec le silencieux (3) pour restreindre le déplacement du silencieux (3) lorsque le silencieux (3) est déplacé vers l'arrière du véhicule,
l'appareil d'échappement étant **caractérisé en ce que**
une distance (L3) dans le sens longitudinal du véhicule entre l'élément de restriction (8, 9) et le silencieux (3) est plus petite que la distance minimum (L4) dans le sens longitudinal du véhicule entre la deuxième partie (5) du tuyau d'échappement (2) et l'appareil de système de carburant.

2. Appareil d'échappement selon la revendication 1,
dans lequel l'élément de restriction (8, 9) est un élément transversal qui renforce le véhicule.

3. Appareil d'échappement selon la revendication 2,
dans lequel une paire d'éléments transversaux sont prévus pour prendre en sandwich, par-dessus et par-dessous, une partie arrière du silencieux (3), et la distance minimum (L1) entre la paire d'éléments transversaux est plus petite que la hauteur maximum (L2) du silencieux (3).

4. Appareil d'échappement selon l'une quelconque des revendications 1 à 3, dans lequel un joint (7) qui absorbe le déplacement vertical de la première partie (4) du tuyau d'échappement (2) associé avec le déplacement vertical du silencieux (3) est prévu dans la première partie (4) du tuyau d'échappement (2).

5. Appareil d'échappement selon l'une quelconque des revendications 1 à 3, dans lequel une partie (7a) qui se courbe plus facilement lorsque le silencieux (3) est déplacé- verticalement que l'autre partie du tuyau d'échappement (2) est prévue dans la première partie (4) du tuyau d'échappement (2).

6. Appareil d'échappement selon l'une quelconque des revendications 1 à 5, dans lequel l'appareil de système de carburant (6) est un réservoir de carburant.
